# FASCICULE DE BREVET EUROPEEN

(11) **EP 4 211 002 B1**
(45) Date de publication et mention de la délivrance du brevet: **01.10.2025**
(21) Numéro de dépôt: 21769414.0
(22) Date de dépôt: 27.08.2021
(51) Int. Cl.: B60R 16/037, G10L 15/22, G10L 21/0232, H04R 3/00, H04R 29/00

(54) **PROCÉDÉ ET SYSTÈME DE LOCALISATION D'UN LOCUTEUR DANS UN RÉFÉRENTIEL LIÉ À UN VÉHICULE**
VERFAHREN UND SYSTEM ZUR LOKALISIERUNG EINES LAUTSPRECHERS IN EINEM REFERENZRAHMEN IN VERBINDUNG MIT EINEM FAHRZEUG
METHOD AND SYSTEM FOR LOCATING A SPEAKER IN A REFERENCE FRAME LINKED TO A VEHICLE

(30) Priorité: 08.09.2020 FR 2009107
(43) Date de publication de la demande: 19.07.2023
(73) Titulaire: Ampere SAS, 92100 Boulogne-Billancourt (FR)
(72) Inventeur: ROSSELLO, Norbert, 06560 Valbonne (FR)
(74) Mandataire: Renault Group
(86) Numéro de dépôt international: PCT/EP2021/073712
(87) Numéro de publication internationale: WO 2022/053334

(56) Documents cités:
- EP-A1- 3 766 717
- EP-A2- 2 028 061
- WO-A1-2015/077662
- FR-A1- 3 087 289
- US-A1- 2015 104 038

## Description

### DOMAINE TECHNIQUE DE L'INVENTION

La présente invention concerne de manière générale la localisation d'un locuteur dans l'espace.

Elle concerne plus particulièrement un procédé localisation d'un locuteur dans un référentiel lié à un véhicule.

L'invention trouve une application particulièrement avantageuse dans les véhicules automobiles comportant des fonctions contrôlables par commande vocale.

Elle concerne également un système capable de mettre en œuvre ce procédé.

### ETAT DE LA TECHNIQUE

La localisation d'un locuteur à l'intérieur d'un véhicule automobile est de plus en plus utilisée. En effet, cela permet de mettre en place, par commande vocale, des services dédiés en fonction de la position du locuteur dans le véhicule. Par exemple, grâce à la localisation, la commande vocale « ouvrir ma vitre » permet d'ouvrir la vitre la plus proche du locuteur. La localisation peut aussi permettre de donner une priorité supérieure à une commande vocale, par exemple pour régler le volume de la musique ou changer d'itinéraire, émise par le conducteur, ce qui rend le contrôle du véhicule par commande vocal plus sûr.

Actuellement, pour localiser un locuteur, certains véhicules sont équipés d'un réseau de plusieurs microphones. Un tel système est par exemple décrit dans le document EP 2028061. Dans ce document, un réseau de quatre microphones est compris dans le tableau de bord du véhicule. Lorsqu'un locuteur prononce une commande vocale, le signal sonore est acquis par les différents microphones, ce qui permet de déterminer une position approximative du locuteur par une méthode de formation de voies (en anglais « beamforming »).

De tels réseaux de microphones sont néanmoins coûteux.

Il est donc apparu le besoin de localiser un locuteur dans un véhicule comprenant un nombre de microphones aussi réduit que possible.

### PRÉSENTATION DE L'INVENTION

Pour satisfaire ce besoin, la présente invention propose de localiser un locuteur à l'aide d'objets connectés présents dans un véhicule.

Plus particulièrement, on propose selon l'invention un procédé de localisation d'un locuteur dans un référentiel lié à un véhicule, comprenant les étapes suivantes :
e1) l'appairage d'un premier objet connecté, comprenant un premier microphone, avec le véhicule ;
e2) la détermination d'une position du premier objet connecté dans le référentiel lié au véhicule ;
e3) la détection d'un signal sonore émis par le locuteur par le premier microphone et par un deuxième microphone ;
e4) localisation du locuteur dans le référentiel lié au véhicule sur la base du signal détecté par le premier microphone et par le deuxième microphone, de la position du premier objet connecté et de la position du deuxième microphone.

Ainsi, grâce à l'invention, la localisation du locuteur est possible sans avoir à équiper le véhicule de microphones ou seulement d'un nombre limité de microphones, par exemple un seul.

En effet, les objets connectés, qui peuvent être définis comme des objets capables, outre leur fonction principale, d'envoyer et de recevoir des informations par l'intermédiaire d'une communication sans fil, sont de plus en plus présents dans notre quotidien. Aujourd'hui, les usagers d'un véhicule possèdent presque tous un ou plusieurs objets connectés. De plus, la plupart de ces objets connectés (smartphones, montres, bracelets...) sont désormais conçus pour recevoir des commandes vocales et sont donc équipés de microphones.

L'invention propose donc de tirer parti des propriétés de localisation de ces objets connectés pour déterminer la position de locuteurs à l'intérieur d'un véhicule. L'invention propose ainsi un procédé simple, robuste et peu onéreux de localisation d'un locuteur dans un véhicule.

Comme décrit en introduction, la localisation du locuteur permet par exemple de renforcer le contrôle du véhicule par commande vocale en le rendant plus simple, plus précis et plus sûr.

D'autres caractéristiques avantageuses et non limitatives du procédé conforme à l'invention, prises individuellement ou selon toutes les combinaisons techniquement possibles, sont les suivantes :
- à l'étape e1), un deuxième objet connecté est appairé avec le véhicule, le deuxième objet connecté comprenant le deuxième microphone ; et à l'étape e2), la position du deuxième objet connecté dans le référentiel lié au véhicule est déterminée ;
- le deuxième microphone est fixé dans le véhicule et est situé à une position prédéterminée dans référentiel lié au véhicule ;
- au moins deux zones de localisation sont définies au sein du véhicule et, à l'étape e4), la localisation du locuteur consiste à déterminer la zone de localisation dans laquelle est positionné le locuteur ;
- à l'étape e3), un premier temps d'arrivée et un deuxième temps d'arrivée sont déterminés, le premier temps d'arrivée horodatant la détection du signal sonore par le premier microphone et le deuxième temps d'arrivée horodatant la détection du signal sonore par le deuxième microphone, et à l'étape e4), le locuteur est localisé dans le référentiel lié au véhicule sur la base du premier temps d'arrivée et du deuxième temps d'arrivée ;
- à l'étape e2), la position du premier objet connecté est déterminée de façon répétée à une fréquence d'actualisation, la fréquence d'actualisation étant déterminée en fonction d'une variation de la position du premier objet connecté dans le référentiel lié au véhicule ;
- le signal sonore est détecté par au moins trois microphones et la position du locuteur dans le référentiel lié au véhicule est déterminée par triangulation acoustique en fonction des positions des trois microphones ;
- à l'étape e3), le signal sonore détecté par le premier microphone et/ou le deuxième microphone est enregistré ; le procédé comprenant en outre une étape e5) d'indentification ou d'authentification du locuteur sur la base du signal sonore enregistré ;
- avant l'étape e5), le signal sonore enregistré est prétraité pour évaluer sa qualité et/ou réduire le bruit et/ou détecter des fréquences vocales.

L'invention propose également un système de localisation comprenant un véhicule ; un premier objet connecté comprenant un premier microphone ; et un deuxième microphone ; le véhicule comprenant un calculateur programmé pour mettre en œuvre le procédé de localisation décrit ci-dessus.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DÉTAILLÉE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une vue schématique de dessus d'un système de localisation d'un locuteur conforme à l'invention comprenant un véhicule automobile et des objets connectés situés à l'intérieur du véhicule ;
[Fig. 2] est une représentation schématique du traitement d'un signal sonore par le système de la figure 1 ;
[Fig. 3] est un schéma bloc d'une séquence d'étapes d'un procédé de localisation et d'identification d'un locuteur conforme à l'invention ;
[Fig. 4] est un schéma bloc d'une séquence d'étapes du procédé de la figure 3 permettant la localisation du locuteur.

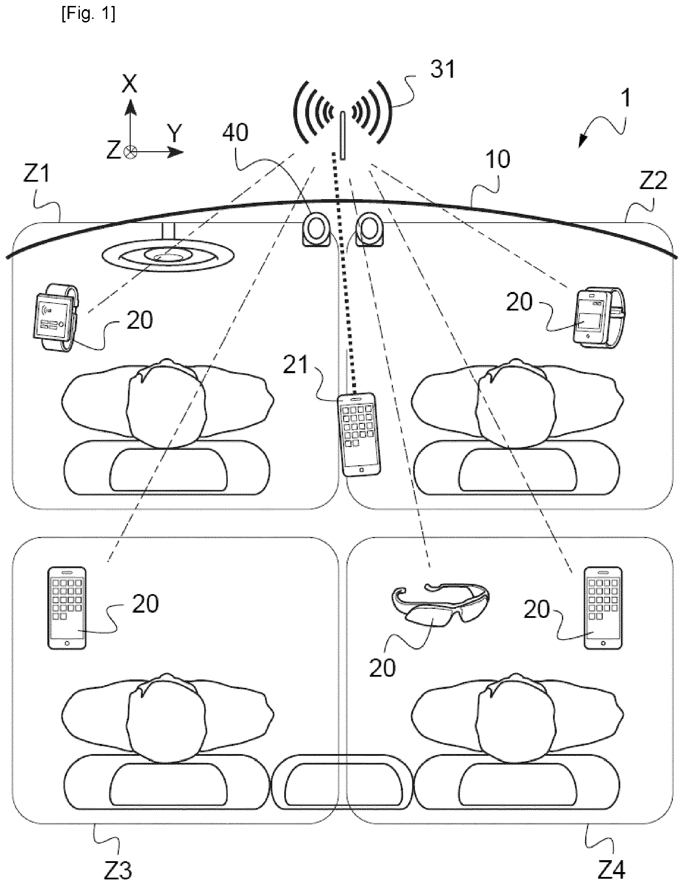

Un système de localisation, c'est-à-dire de détermination de la position d'un locuteur, est représenté sur la figure 1. Le système de localisation 1 comprend :
- un véhicule 10 ;
- des objets connectés 20 ;
- des microphones 40.

Le véhicule 10 comporte un habitacle permettant d'accueillir des usagers. Il pourrait s'agir d'un véhicule automobile tel qu'un camion, un bateau, un avion... Ici, le véhicule 10 est une voiture à cinq places, dans lequel sont installés quatre usagers. Le locuteur L est un des usagers du véhicule 10. Comme le montre la figure 1, un référentiel XYZ est lié au véhicule 10. Ici, le référentiel XYZ lié au véhicule 10 est un référentiel cartésien tridimensionnel dont le plan XY est par exemple compris dans le plan de la figure 1. En variante, le référentiel lié au véhicule peut être un référentiel bidimensionnel, par exemple horizontal.

Les objets connectés 20 sont par exemple des téléphones intelligents, des montres, des bracelets, des ceintures, des lunettes ou encore des objets connectés à vocation médiale. Les objets connectés 20 sont ici des objets connectés portables, couramment appelés « wearables » en anglais. Les objets connectés 20 sont ici des objets mobiles, par opposition à des objets solidaires du véhicule 10. En d'autres termes, ils présentent des dimensions et des poids leur permettant d'être facilement tenus à une main par un usager. Ici, les objets connectés sont définis comme des objets capables, outre leur fonction principale, d'envoyer et de recevoir des informations par l'intermédiaire d'une communication sans fil. Une fois appairés, par exemple avec un système multimédia du véhicule 10, les objets connectés 20 peuvent, pour certains, être commandés à distance, par exemple au moyen d'une interface utilisateur du système multimédia. Le terme « appairer », ou « l'appairage », signifie ici connecter ou unir un objet connecté 20 et le véhicule 10 par une connexion sans fil pour que ceux-ci puissent échanger des informations.

Six objets connectés 20 sont représentés sur la figure 1. Ici, les objets connectés 20 appartiennent aux usagers. Dans l'exemple représenté, chaque usager possède donc un ou deux objets connectés 20.

Ici, chaque objet connecté 20 comprend un microphone (non représenté).

De façon préférentielle, un des microphones, appelé microphone local 40, appartient au véhicule 10. Comme le montre la figure 1, le microphone local 40 est situé niveau du tableau de bord du véhicule 10. Le microphone local 40 est par exemple intégré au tableau de bord du véhicule 10. Le microphone local 40 peut être simple ou dual, c'est-à-dire comprenant deux éléments de réception, par exemple deux microphones proches l'un de l'autre comme représenté sur la figure 1. La position du microphone local 40 est connue dans le référentiel XYZ.

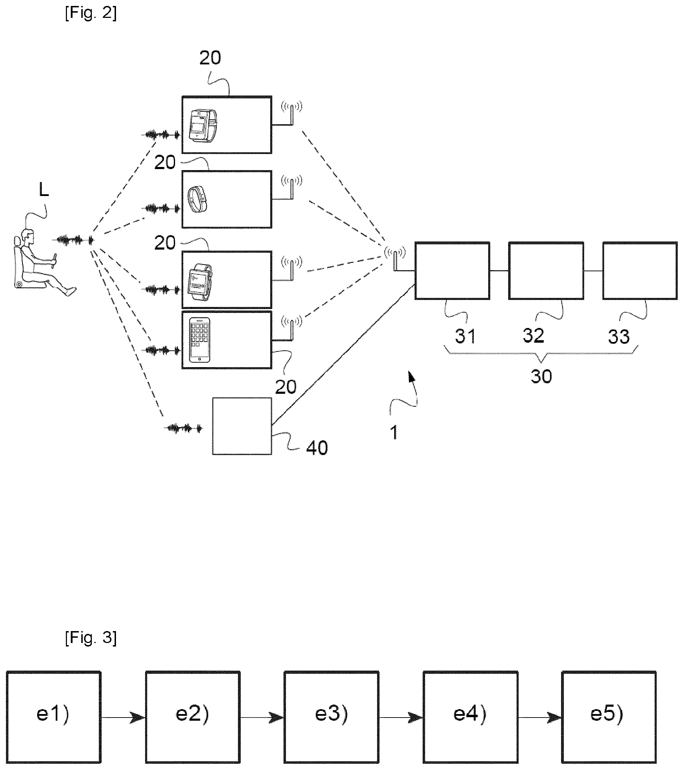

Comme le montre la figure 2, le véhicule 1 comprend aussi un calculateur 30, parfois appelé unité de commande électronique (UCE). Le calculateur 30 comprend au moins une mémoire et au moins un processeur. Des instructions permettant la détermination de la position du locuteur L sont enregistrées sur la mémoire et sont implémentées par le processeur. Le calculateur 30 possède aussi en mémoire la position du microphone local 40 dans le référentiel XYZ. Le calculateur 30 est également connecté à différentes parties du véhicule, par exemple au système multimédia, au système de navigation, aux commandes des vitres, de manière à pouvoir les contrôler.

Ici, le calculateur 30 comprend plus spécifiquement un module de réception 31, un module de temps d'arrivé 32 et un module de localisation 33. Lors de chaque tentative de localisation du locuteur, chaque module 31, 32, 33, ainsi que les microphones, reçoivent un flux d'entrée, effectuent un traitement, et transmettent un flux de sortie. Chaque module 31, 32, 33, ainsi que les microphones des objets connectés 20 comprennent un port données et un port contrôle. Le fonctionnement des différents modules est détaillé ultérieurement.

Sur la figure 2, on a représenté de façon très schématique la situation illustrée sur la figure 1. Seulement quatre des objets connectés 20 de la figure 1 sont représentés sur la figure 2. Sur la figure 2, le locuteur L est le conducteur du véhicule 10.

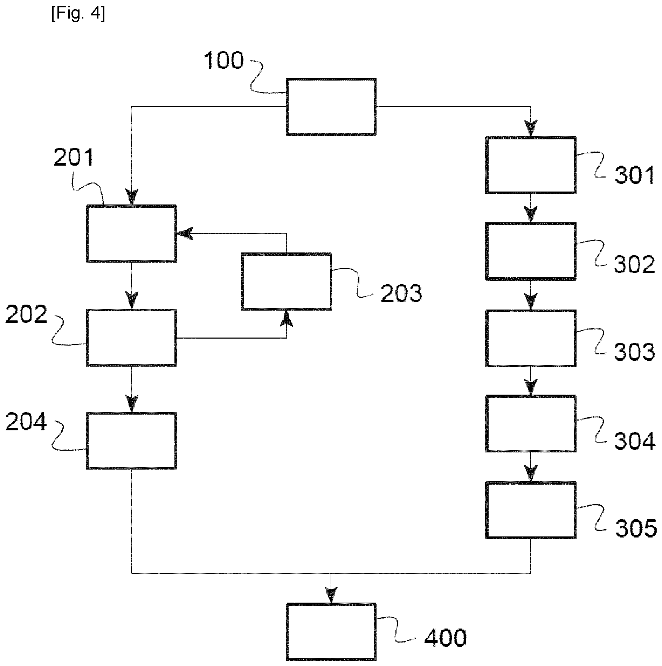

Un procédé de localisation du locuteur L dans le référentiel XYZ lié au véhicule 10, peut maintenant être décrit en détails, en particulier à l'aide des figures 3 et 4. Le procédé est ici mis en œuvre par le système de localisation 1 apparaissant sur les figures 1 et 2.

Comme illustré en figure 3, le procédé de localisation comprend principalement les quatre étapes suivantes :
e1) l'appairage d'au moins un des objets connectés 20, comprenant un premier microphone, avec le véhicule ;
e2) la détermination de la position de chaque objet connecté appairé dans le référentiel lié au véhicule ;
e3) la détection d'un signal sonore émis par le locuteur, par au moins le microphone de chaque objet connecté appairé ;
e4) la détermination de la position du locuteur dans le référentiel lié au véhicule sur la base du signal détecté par les microphones et de la position des microphones.

La localisation peut consister à déterminer une position précise, par exemple au centimètre près, du locuteur ou plus spécifiquement d'une partie du locuteur, par exemple sa tête. La localisation peut consister à déterminer une position approximative du locuteur ou une région du véhicule dans laquelle se trouve le locuteur. La localisation peut ainsi consister à déterminer si le locuteur se situe sur les sièges de gauche ou de droite, ou encore sur les sièges avant ou arrière.

Seuls peuvent être utilisés les microphones des objets connectés, si plusieurs de ces objets sont appairés. De préférence, l'un des microphones utilisé est microphone local 40 équipant le véhicule 10.

Dans l'exemple de réalisation illustré sur les figures 1 à 4, le signal est détecté à la fois par plusieurs microphones, chacun compris dans un objet connecté 20, et par le microphone local 40 du véhicule 10.

Le signal sonore émis par le locuteur L est ici un signal vocal. Le signal sonore est ici plus spécifiquement un signal intelligible puisque ce dernier est émis dans le but de commander par la voix une fonctionnalité du véhicule 10. Le signal sonore est donc ici une commande vocale, par exemple pour baisser ou monter une vitre, définir un itinéraire de navigation, régler un siège ou encore écouter une playlist spécifique.

On peut maintenant décrire plus en détail les étapes précitées.

Lors de la première étape e1), les objets connectés 20 présents dans l'habitacle du véhicule 10 sont appairés avec le calculateur 30 du véhicule 10. De préférence, chaque objet connecté 20 détecté par le véhicule 10 est automatiquement appairé.

De cette façon, les objets connectés 20 sont connectés avec le calculateur 30 de façon à pouvoir échanger des données avec le module de réception 31 du calculateur 30.

Au bloc 100, les objets connectés 20 sont appairés avec le véhicule 10 par un protocole de communication sans fil à courte distance utilisant des ondes radio. Le protocole de communication permet ici de géo-localiser chaque objet connecté 20 par rapport au véhicule 10, c'est-à-dire par rapport au référentiel XYZ.

Ici, les objets connectés 20 sont appairés avec le véhicule 10 au moyen d'un protocole de communication Bluetooth^{®} de norme 5.1 ou plus récente. La norme Bluetooth 5.1, en calculant la dissipation des signaux radio (RSSI) et les angles d'arrivées (AoA) et départ (AoD) des signaux, permet de localiser les objets connectés 20 au centimètre près. Les détails de cette méthode de localisation sont décrits dans cette norme.

Ici, les objets connectés 20 sont appairés à un système Bluetooth à faible consommation d'énergie du véhicule 10.

Une fois appairés, lors de l'étape e2), la position de chaque objet connecté 20 dans le référentiel XYZ lié au véhicule 10 est déterminée.

Sur la figure 4, un exemple de réalisation de l'étape e2) est schématisé par les blocs 201 à 204.

Dans un premier temps, au bloc 201, les objets connectés 20 échangent avec le calculateur 30 des données de contrôle pour établir les connections. Les données de contrôles peuvent par exemple comprendre un débit binaire, un mode de transmission des données, par exemple un protocole de compression ou de segmentation, des modes de correction d'erreurs et des modes de sécurisation par exemple d'authentification ou d'encryptions. Le calculateur 30 envoie par exemple des requêtes aux objets connectées 20 leur demandant de s'identifier.

Le calculateur 30 peut alors demander à chaque objet connecté 20 sa position. La position des objets connectés 20 est ici fournie par le protocole Bluetooth de norme 5.1 ou plus récente. Le calculateur 30 détermine la position de chaque objet connecté 20 dans le référentiel XYZ lié au véhicule 10. La position de chaque objet connecté 20 est représentée par un triplet de coordonnées cartésiennes.

Le calculateur 30 actualise, à une fréquence d'actualisation, par exemple de 1Hz, les coordonnées des objets connectés 20. Cette actualisation permet de suivre les mouvements des objets connectés 20 dans le véhicule 10, par exemple le mouvement d'une montre connectée au poignet du conducteur.

Pour chaque objet connecté 20, au bloc 202, le calculateur 30 détermine une position moyenne de l'objet connecté 20. La position moyenne est calculée en moyennant un nombre déterminé des dernières positions connues de l'objet connecté 20, c'est-à-dire obtenues lors des dernières actualisations, par exemple ses 5 ou 10 dernières positions connues. Le calculateur 30 détermine aussi les variations de ces dernières positions connues par rapport à la position moyenne. Le calculateur 30 compare ensuite les variations à un seuil haut prédéterminé. Le calculateur effectue cette comparaison pour chaque axe du référentiel, c'est-à-dire pour chaque coordonnée de l'objet connecté 20.

Lorsque qu'une variation de l'une des coordonnées est supérieure au seuil haut, le calculateur 30 évalue que l'objet connecté 20 se déplace. Au bloc 203, le calculateur 30 augmente alors la fréquence d'actualisation pour déterminer de façon plus précise la position moyenne. Inversement, le calculateur 30 peut aussi comparer les variations à un seuil bas prédéterminé et diminuer la fréquence d'actualisation lorsque les variations sont inférieures au seuil bas. Le calculateur 30 évalue alors que l'objet connecté 20 est immobile, il n'est alors pas nécessaire d'actualiser trop souvent ses coordonnées.

Lorsque les variations sont inférieures au seuil haut, le calculateur 30 évalue que les coordonnées de l'objet connecté 20 sont stables. Au bloc 204, le calculateur détermine alors une position stable de l'objet connecté 20 comme égale à la position la plus récente.

A l'étape e2), le calculateur détermine donc une position stable de chaque objet connecté 20 qui est représentée par un triplet de coordonnées dans le référentiel cartésien XYZ lié au véhicule 10.

A l'étape e3), le signal sonore émis par le locuteur L est détecté par les microphones du système de localisation 1. Dans l'exemple illustré en figure 2, le signal sonore est détecté à la fois par les microphones des objets connectés 20 et par le microphone local 40 du véhicule.

Le terme « détecter » signifie ici percevoir le signal sonore de manière à pouvoir déterminer des propriétés caractéristiques du signal sonore. Les propriétés caractéristiques sont par exemple la durée, l'intensité du signal sonore, le début et la fin du signal sonore.

Ici, le signal sonore est plus spécifiquement enregistré au moyen des microphones. Le signal sonore peut être acquis et enregistré temporairement sur les objets connectés 20 puis transmis au calculateur 30. Le signal sonore peut aussi être transmis progressivement pendant son acquisition par les objets connectés 20 au calculateur 30 et être enregistré seulement sur ce dernier. Dans tous les cas, enregistrer le signal sonore permet d'en extraire ses propriétés caractéristiques.

L'étape e3) peut être effectuée, avant l'étape e2), après l'étape e2) comme le montre la figure 3 ou encore en parallèle de l'étape e2) comme le montre la figure 4. Sur la figure 4, un exemple de réalisation de l'étape e3) est schématisé par les blocs 301 à 305.

Au bloc 301, le signal sonore est capturé par le microphone de chaque objet connecté 20 et par le microphone local 40 du véhicule 10. Le signal sonore capturé par chaque microphone est ensuite numérisé.

Lors du traitement du signal sonore par le système de localisation 1 représenté en figure 2, les données relatives au signal lui-même transitent par les ports données des différents éléments du système de localisation 1 tandis que des informations, ou des données de contrôle, relatives par exemple à l'état des objets connectés 20, à l'état de leur connections avec le véhicule ou encore à traitements effectués sur le signal, sont transmises par les ports contrôle de ces éléments.

Ainsi, pour le port données des objets connectés 20, le flux d'entrée comprend le signal sonore, le traitement consiste en une numérisation du signal avec, en fonction des capacités de l'objet connecté 20, un possible prétraitement du signal, par exemple pour évaluer la qualité du signal ou réduire le bruit, et le flux de sortie comprend le signal numérisé dans un format défini lors de l'appairage de l'objet connecté 20.

En complément, pour le port contrôle des objets connectés, le flux d'entrée comprend des requêtes audio envoyées par le calculateur 30, le traitement consiste à interpréter et exécuter les requêtes, et le flux de sortie comprend des données de contrôle. Les requêtes audio peuvent par exemple comprendre un accord sur le codec à utiliser, une validation de la réception des données et une mesure de la qualité du signal capturé.

Pour le microphone local 40, le flux d'entrée comprend le signal sonore du locuteur, le traitement consiste en une numérisation du signal avec un possible prétraitement du signal, par exemple pour réduire le bruit, et le flux de sortie comprend le signal numérisé.

Au bloc 302, les signaux numérisés sont transmis au calculateur 30. Le calculateur 30 définit un canal radio par microphone. Le signal sonore génère donc sur la mémoire du calculateur 30 un signal numérisé par canal. Les signaux numérisés sont plus spécifiquement transmis au module de réception 31.

Au bloc 303, le module de réception 31 conditionne les signaux numérisés afin de sélectionner ceux de qualité suffisante. La qualité du signal est ici évaluée par une méthode de détection de signal vocal, méthode plus connue sous l'acronyme anglais VAD pour « voice active détection » et par estimation du rapport signal à bruit. Cette méthode permet par exemple de détecter les amplitudes et les fréquences vocales caractéristiques de la voix humaine. La détection de signal vocal mise en œuvre ici est par exemple celle du codec G 729. En fonction de la qualité des signaux numérisée, le module de réception sélectionne les canaux à exploiter par la suite. Les canaux pour lesquels la qualité du signal n'est pas assez élevée ne sont pas sélectionnés. Ainsi, par exemple, seuls les signaux dont le rapport signal à bruit est supérieur à un seuil prédéterminé, par exemple de 12 dB, sont conservés. Encore en exemple, lorsque la détection de signal vocal ne détecte pas la voix d'un usager, le signal numérisé n'est pas conservé. Ici, un traitement de réduction du bruit est aussi effectué par le module de réception 31.

Pour le port données du module de réception 31, le flux d'entrée comprend les signaux numérisés, le traitement consiste à évaluer la qualité du signal, et possiblement à réduire le bruit, et le flux de sortie comprend les signaux numérisés des canaux conservés.

Pour le port contrôle du module de réception 31, le flux d'entrée comprend des données de contrôle de chaque objet connecté 20, le traitement consiste en une interprétation des requêtes avec chaque objet connecté 20, le flux de sortie comprend des informations relatives aux objets connectés 20, tel que leur nombre et les canaux à traiter. C'est aussi au moyen de ces informations, échangées entre les ports contrôles, que les objets connectés 20 transmettent leur position au calculateur 30 à l'étape e2).

Au bloc 304, le module de temps d'arrivée 32 détermine des temps d'arrivée des signaux des canaux conservés. Les temps d'arrivée sont ici déterminés par rapport à l'un d'entre eux choisi comme référence. Les temps d'arrivée sont donc ici relatifs. Ici, les temps d'arrivé sont représentatifs du moment où un microphone commence à détecter ou enregistrer le signal sonore. En d'autres termes, les temps d'arrivée horodatent, de façon relative, la détection du signal sonore par les microphones. Les temps d'arrivée sont par exemple déterminés en corrélant les signaux numérisés des canaux conservés entre eux, par exemple par corrélation croisée.

De préférence, les signaux des canaux conservés sont normalisés en amplitude avant de déterminer les temps d'arrivée. Ils sont par exemple normalisés sur la base du contrôle automatique de gain de chaque microphone. L'amplitude de chaque signal est alors par exemple comprise entre 0 et 1.

Au bloc 305, le module temps d'arrivée 32 peut ainsi déterminer quel microphone a détecté en premier le signal sonore. Le microphone ayant détecté en premier le signal sonore est celui dont le temps d'arrivée correspondant est le plus petit. En d'autres termes, le module temps d'arrivée 32 peut déterminer le microphone le plus proche du locuteur.

Pour le port données du module temps d'arrivée 32, le flux d'entrée comprend les signaux numérisés, et le traitement consiste à déterminer des temps d'arrivée relatifs pour chaque canal et à sélectionner le canal associé au temps d'arrivée le plus petit.

Pour le port contrôle du module temps d'arrivée 32, le flux d'entrée comprend des données de contrôle et les informations relatives à chaque objet connecté 20, le traitement consiste en une interprétation des informations relatives aux objets connectés 20, le flux de sortie comprend un identifiant du canal sélectionné, par exemple son numéro, et la position du microphone associé.

A l'étape e4), schématisée par le bloc 400 sur la figure 4, la position du locuteur L est déterminée sur la base du signal détecté par les microphones et de la position des objets connectés 20.

En effet, la position des objets connectés 20, déterminée à l'étape e2), est assimilée à la position des microphones. La position du microphone local 40 est quant à elle prédéterminée. Déterminer le microphone le plus proche du locuteur à l'étape e3) permet donc d'estimer la position du locuteur L.

La position du locuteur L peut par exemple être déterminée comme correspondant à la position de l'objet connecté 20 le plus proche de lui. Localiser le locuteur consiste alors à déterminer de façon précise, aussi précise que la position de l'objet connecté, la position du locuteur dans le référentiel lié au véhicule.

Ici, plusieurs zones de localisations sont définies dans le véhicule 10, par exemple quatre zones de localisation Z1, Z2, Z3, Z4 sur la figure 1. Lors de l'étape e4), le module de localisation 32 détermine la zone de localisation dans laquelle est positionné le locuteur L. Localiser le locuteur consiste alors à déterminer la zone de localisation dans laquelle il se trouve.

Au bloc 400, le module de localisation 33 associe l'identifiant du canal sélectionnée et la position du microphone ayant détecté, ou enregistré, le signal à une des zones de localisation. En sortie, le module de localisation 32 transmet donc l'identifiant associé à une des zones de localisation.

Ici, la précision de la localisation dépend donc des dimensions des zones de localisation Z1, Z2, Z3, Z4. Cette précision relative de la position du locuteur L est néanmoins suffisante pour rendre plus simple, plus précis et plus sûr le contrôle du véhicule par commande vocale.

Lorsque les signaux numérisés issus d'au moins trois canaux sont exploitables, c'est-à-dire ici conservés au bloc 303, la position du locuteur L dans le référentiel XYZ peut être déterminée par triangulation acoustique grâce à la position des microphones. Ici, la position du locuteur est déterminée de façon précise dans le référentiel lié au véhicule. La détermination précise de la position du locuteur peut permettre en outre d'effectuer des réglages dans le véhicule 10, par exemple de la ceinture de sécurité, d'un dispositif d'affichage, d'un siège.

Comme le montre la figure 1, il peut arriver qu'un objet connecté, tel que celui représenté par la référence numérique 21 sur la figure 1, soit situé à la frontière de deux zones de localisation. Dans ce cas, cet objet connecté peut ne pas être pris en compte lors de la détermination de la zone de localisation Z1, Z2, Z3, Z4 dans laquelle est situé le locuteur.

Comme représenté sur la figure 3, lorsque le signal sonore est enregistré, le procédé de localisation peut comprendre une étape e5) d'identification, voire d'authentification, du locuteur.

L'indentification du locuteur est ici basée sur des techniques de biométrie vocale. La biométrie vocale s'appuie sur des algorithmes capables d'identifier des caractéristiques vocales spécifiques à chaque personne, ces caractéristiques constituants son emprunte vocale. L'emprunte vocale est par exemple basée sur l'utilisation de phrases clés, préalablement prononcées par le locuteur et enregistrées sur une mémoire du calculateur 30. Lors d'une commande vocale, le locuteur prononce une des phrases clés suivie de sa commande. La phrase clé identifie le locuteur, la commande vocale est ensuite traitée par le véhicule, ici en fonction de la position du locuteur.

De façon remarquable, la localisation du locuteur permet une meilleure identification de ce dernier. En effet, la localisation permet par exemple de baser l'identification du locuteur sur les signaux de meilleure qualité acquis par les microphones les plus proches de celui-ci.

Lors d'un même trajet à bord du véhicule, le calculateur peut aussi être programmé pour apprendre la position des différents usagers. Lors d'identifications successives, l'identification d'un locuteur peut prendre en compte sa position. Par exemple, il est peu probable que le conducteur change de place au court d'un trajet. Par conséquent, une fois identifié grâce à une première commande vocale, sa position peut servir à l'identifier lors de commandes vocales ultérieures.

De plus, les objets connectés 20 peuvent faciliter l'identification du locuteur. Par exemple, l'objet connecté 20 le plus proche du locuteur peut être considéré comme lui appartenant, la transmission de données biométriques ou physiologiques peut renforcer ou accélérer son identification. Cet objet connecté 20 peut même identifier lui-même le locuteur.

Les objets connectés 20, grâce aux données biométriques ou physiologiques, peuvent aussi permettre d'authentifier le locuteur, c'est-à-dire de s'assurer que le locuteur est physiquement présent dans le véhicule. Cela rend plus sûr le contrôle du véhicule par commande vocale, un message enregistré ne pouvant par exemple pas faire office de commande vocale.

Dans l'exemple représenté en figure 1, le système de localisation 1 comprend plus d'objets connectés 20 que d'usagers et le véhicule 10 comprend son propre microphone local 40. Le procédé de localisation peut cependant être mis en œuvre avec moins d'objets connectés et donc moins de microphones.

Ainsi, en variante, le système de localisation peut par exemple comprendre un objet connecté par usager sans que le véhicule ne comprenne de microphone local. Encore en variante, le système de localisation peut comprendre moins d'objets connectés que d'usagers, de préférence lorsque le véhicule comprend le microphone local.

Par exemple, dans une situation avec un passager et un conducteur, un objet connecté et le microphone local sont suffisants pour déterminer si un locuteur est situé dans une zone localisation gauche ou dans une zone de localisation droite. De même deux objets connectés équipés de microphones sont suffisants pour déterminer si un locuteur est situé dans une zone localisation gauche ou dans une zone de localisation droite.

Dans l'exemple de réalisation présenté en figure 4, la position du locuteur est déterminée sur la base des signaux enregistrés en calculant des temps d'arrivée.

En variante, la position du locuteur est déterminée au moyen des propriétés caractéristiques du signal sonore.

Par exemple, lorsqu'un horodatage du signal détecté est compris dans les propriétés caractéristiques, les temps d'arrivée peuvent être calculés sur la base des écarts temporels entre ces horodatages. Le microphone le plus proche du locuteur peut aussi être déterminé sur la base de l'horodatage le plus ancien.

Encore en exemple, lorsque les gains en réception des objets connectés sont calibrés, la position du locuteur peut être déterminée uniquement sur la base de l'intensité du signal sonore détecté par les microphones. Le microphone pour lequel le signal sonore est le plus intense est considéré comme celui le plus proche du locuteur.

Dans ces variantes, le signal sonore n'est pas nécessairement enregistré mais peut être seulement détecté. La quantité de données à transmettre et à traiter est alors faible, ce qui permet d'accélérer le procédé de localisation.

## Revendications

1. Procédé de localisation d'un locuteur (L) dans un référentiel (XYZ) lié à un véhicule (10), comprenant les étapes suivantes :
e1) l'appairage d'un premier objet connecté (20, 21), comprenant un premier microphone, avec le véhicule (10) ;
e2) la détermination d'une position du premier objet connecté (20, 21) dans le référentiel (XYZ) lié au véhicule (10) ;
e3) la détection d'un signal sonore émis par le locuteur (L) par le premier microphone et par un deuxième microphone ;
e4) la localisation du locuteur (L) dans le référentiel (XYZ) lié au véhicule (10) sur la base du signal détecté par le premier microphone et par le deuxième microphone, de la position du premier objet connecté (20, 21) et de la position du deuxième microphone.

2. Procédé selon la revendication 1, dans lequel :
- à l'étape e1), un deuxième objet connecté (20, 21) est appairé avec le véhicule (10), le deuxième objet connecté (20, 21) comprenant le deuxième microphone ; et
- à l'étape e2), la position du deuxième objet connecté dans le référentiel (XYZ) lié au véhicule (10) est déterminée.

3. Procédé selon la revendication 1, dans lequel le deuxième microphone est fixé dans le véhicule (10) et est situé à une position prédéterminée dans référentiel (XYZ) lié au véhicule (10).

4. Procédé selon l'une des revendications 1 à 3, dans lequel au moins deux zones de localisation (Z1, Z2, Z3, Z4) sont définies au sein du véhicule (10) et dans lequel, à l'étape e4), la localisation du locuteur (L) consiste à déterminer la zone de localisation (Z1, Z2, Z3, Z4) dans laquelle est positionné le locuteur (L).

5. Procédé selon l'une des revendications 1 à 4, dans lequel, à l'étape e3), un premier temps d'arrivée et un deuxième temps d'arrivée sont déterminés, le premier temps d'arrivée horodatant la détection du signal sonore par le premier microphone et le deuxième temps d'arrivée horodatant la détection du signal sonore par le deuxième microphone, et dans lequel, à l'étape e4), le locuteur (L) est localisé dans le référentiel (XYZ) lié au véhicule (10) sur la base du premier temps d'arrivée et du deuxième temps d'arrivée.

6. Procédé selon l'une des revendications 1 à 5, dans lequel, à l'étape e2), la position du premier objet connecté (20, 21) est déterminée de façon répétée à une fréquence d'actualisation, la fréquence d'actualisation étant déterminée en fonction d'une variation de la position du premier objet connecté (20) dans le référentiel (XYZ) lié au véhicule (10).

7. Procédé selon l'une des revendications 1 à 6, dans lequel le signal sonore est détecté par au moins trois microphones et dans lequel la position du locuteur (L) dans le référentiel (XYZ) lié au véhicule (10) est déterminée par triangulation acoustique en fonction des positions des trois microphones.

8. Procédé selon l'une des revendications 1 à 7, dans lequel :
- à l'étape e3), le signal sonore détecté par le premier microphone et/ou le deuxième microphone est enregistré ;
le procédé comprenant en outre une étape e5) d'indentification ou d'authentification du locuteur (L) sur la base du signal sonore enregistré.

9. Procédé selon la revendication 8, dans lequel, avant l'étape e5), le signal sonore enregistré est prétraité pour évaluer sa qualité et/ou réduire le bruit et/ou détecter des fréquences vocales.

10. Système (1) comprenant un véhicule (10), un premier objet connecté (20, 21) comprenant un premier microphone, et un deuxième microphone, le véhicule (10) comprenant un calculateur (30) programmé pour implémenter les étapes suivantes :
e1) l'appairage du premier objet connecté (20, 21) avec le véhicule (10) ;
e2) la détermination d'une position du premier objet connecté (20, 21) dans un référentiel (XYZ) lié au véhicule (10) ;
e3) la détection d'un signal sonore émis par un locuteur (L) par le premier microphone et par le deuxième microphone ;
e4) la localisation du locuteur (L) dans le référentiel (XYZ) lié au véhicule (10) sur la base du signal détecté par le premier microphone et le deuxième microphone, de la position du premier objet connecté (20, 21) et de la position du deuxième microphone.

## Patentansprüche

1. Verfahren zur Lokalisierung eines Sprechers (L) in einem mit einem Fahrzeug (10) verbundenen Bezugssystem (XYZ), umfassend die folgenden Schritte:
e1) das Koppeln eines ersten verbundenen Objekts (20, 21), das ein erstes Mikrofon umfasst, mit dem Fahrzeug (10) ;
e2) das Ermitteln einer Position des ersten verbundenen Objekts (20, 21) in dem mit dem Fahrzeug (10) verbundenen Bezugssystem (XYZ);
e3) das Detektieren eines von dem Sprecher (L) ausgesendeten Schallsignals durch das erste Mikrofon und durch ein zweites Mikrofon;
e4) das Lokalisieren des Sprechers (L) in dem mit dem Fahrzeug (10) verbundenen Bezugssystem (XYZ) auf der Grundlage des von dem ersten Mikrofon und von dem zweiten Mikrofon detektierten Signals, der Position des ersten verbundenen Objekts (20, 21) und der Position des zweiten Mikrofons.

2. Verfahren nach Anspruch 1, wobei:
- beim Schritt e1) ein zweites verbundenes Objekt (20, 21) mit dem Fahrzeug (10) gekoppelt wird, wobei das zweite verbundene Objekt (20, 21) das zweite Mikrofon umfasst; und
- beim Schritt e2) die Position des zweiten verbundenen Objekts in dem mit dem Fahrzeug (10) verbundenen Bezugssystem (XYZ) ermittelt wird.

3. Verfahren nach Anspruch 1, wobei das zweite Mikrofon in dem Fahrzeug (10) befestigt ist und in einer vorbestimmten Position in dem mit dem Fahrzeug (10) verbundenen Bezugssystem (XYZ) gelegen ist.

4. Verfahren nach einem der Ansprüche 1 bis 3, wobei mindestens zwei Lokalisierungsbereiche (Z1, Z2, Z3, Z4) innerhalb des Fahrzeugs (10) definiert werden und wobei beim Schritt e4) die Lokalisierung des Sprechers (L) darin besteht, den Lokalisierungsbereich zu ermitteln (Z1, Z2, Z3, Z4), in dem sich der Sprecher (L) befindet.

5. Verfahren nach einem der Ansprüche 1 bis 4, wobei beim Schritt e3) eine erste Ankunftszeit und eine zweite Ankunftszeit bestimmt werden, wobei die erste Ankunftszeit das Detektieren des Schallsignals durch das erste Mikrofon zeitstempelt und wobei die zweite Ankunftszeit das Detektieren des Schallsignals durch das zweite Mikrofon zeitstempelt und wobei beim Schritt e4) der Sprecher (L) in dem mit dem Fahrzeug (10) verbundenen Bezugssystem (XYZ) auf der Grundlage der ersten Ankunftszeit und der zweiten Ankunftszeit lokalisiert wird.

6. Verfahren nach einem der Ansprüche 1 bis 5, wobei beim Schritt e2) die Position des ersten verbundenen Objekts (20, 21) mit einer Aktualisierungshäufigkeit wiederholt ermittelt wird, wobei die Aktualisierungshäufigkeit in Abhängigkeit von einer Änderung der Position des ersten verbundenen Objekts (20) in dem mit dem Fahrzeug (10) verbundenen Bezugssystem (XYZ) ermittelt wird.

7. Verfahren nach einem der Ansprüche 1 bis 6, wobei das Schallsignal von mindestens drei Mikrofonen detektiert wird und wobei die Position des Sprechers (L) in dem mit dem Fahrzeug (10) verbundenen Bezugssystem (XYZ) durch akustische Triangulation in Abhängigkeit von den Positionen der drei Mikrofone ermittelt wird.

8. Verfahren nach einem der Ansprüche 1 bis 7, wobei:
- beim Schritt e3) das von dem ersten Mikrofon und/oder dem zweiten Mikrofon detektierte Schallsignal gespeichert wird;
wobei das Verfahren ferner einen Schritt e5) zur Identifizierung oder Authentifizierung des Sprechers (L) auf der Grundlage des gespeicherten Schallsignals umfasst.

9. Verfahren nach Anspruch 8, wobei das gespeicherte Schallsignal vor dem Schritt e5) vorverarbeitet wird, um seine Qualität zu beurteilen und/oder das Rauschen zu verringern und/oder Sprachfrequenzen zu detektieren.

10. System (1), umfassend ein Fahrzeug (10), ein erstes verbundenes Objekt (20, 21), das ein erstes Mikrofon umfasst, und ein zweites Mikrofon, wobei das Fahrzeug (10) einen Rechner (30) umfasst, der dazu programmiert ist, die folgenden Schritte zu implementieren:
e1) das Koppeln des ersten verbundenen Objekts (20, 21) mit dem Fahrzeug (10);
e2) das Ermitteln einer Position des ersten verbundenen Objekts (20, 21) in einem mit dem Fahrzeug (10) verbundenen Bezugssystem (XYZ);
e3) das Detektieren eines von einem Sprecher (L) ausgesendeten Schallsignals durch das erste Mikrofon und durch das zweite Mikrofon;
e4) das Lokalisieren des Sprechers (L) in dem mit dem Fahrzeug (10) verbundenen Bezugssystem (XYZ) auf der Grundlage des von dem ersten Mikrofon und dem zweiten Mikrofon detektierten Signals, der Position des ersten verbundenen Objekts (20, 21) und der Position des zweiten Mikrofons.

## Claims

1. Method for locating a speaker (L) in a reference frame (XYZ) attached to a vehicle (10), comprising the following steps:
e1) pairing a first connected object (20, 21), comprising a first microphone, with the vehicle (10);
e2) determining a position of the first connected object (20, 21) in the reference frame (XYZ) attached to the vehicle (10);
e3) detecting a sonic signal emitted by the speaker (L) with the first microphone and with a second microphone;
e4) locating the speaker (L) in the reference frame (XYZ) attached to the vehicle (10) based on the signal detected with the first microphone and with the second microphone, on the position of the first connected object (20, 21) and on the position of the second microphone.

2. Method according to Claim 1, wherein:
- in step e1), a second connected object (20, 21) is paired with the vehicle (10), the second connected object (20, 21) comprising the second microphone; and
- in step e2), the position of the second connected object in the reference frame (XYZ) attached to the vehicle (10) is determined.

3. Method according to Claim 1, wherein the second microphone is fixed in the vehicle (10) and is located in a predetermined position in the reference frame (XYZ) attached to the vehicle (10).

4. Method according to any of Claims 1 to 3, wherein at least two location zones (Z1, Z2, Z3, Z4) are defined within the vehicle (10) and wherein, in step e4), locating the speaker (L) consists in determining the location zone (Z1, Z2, Z3, Z4) in which the speaker (L) is positioned.

5. Method according to any of Claims 1 to 4, wherein, in step e3), a first arrival time and a second arrival time are determined, the first arrival time dating detection of the sonic signal with the first microphone and the second arrival time dating detection of the sonic signal with the second microphone, and wherein, in step e4), the speaker (L) is located in the reference frame (XYZ) attached to the vehicle (10) based on the first arrival time and on the second arrival time.

6. Method according to any of Claims 1 to 5, wherein, in step e2), the position of the first connected object (20, 21) is determined repeatedly at an update frequency, the update frequency being determined depending on a variation in the position of the first connected object (20) in the reference frame (XYZ) attached to the vehicle (10) .

7. Method according to any of Claims 1 to 6, wherein the sonic signal is detected with at least three microphones and wherein the position of the speaker (L) in the reference frame (XYZ) attached to the vehicle (10) is determined by acoustic triangulation depending on the positions of the three microphones.

8. Method according to any of Claims 1 to 7, wherein:
- in step e3), the sonic signal detected with the first microphone and/or second microphone is recorded; the method further comprising a step e5) of identifying or authenticating the speaker (L) based on the recorded sonic signal.

9. Method according to Claim 8, wherein, before step e5), the recorded sonic signal is pre-processed with a view to evaluating its quality and/or decreasing noise and/or detecting vocal frequencies.

10. System (1) comprising a vehicle (10), a first connected object (20, 21) comprising a first microphone, and a second microphone, the vehicle (10) comprising a computer (30) programmed to implement the following steps:
e1) pairing the first connected object (20, 21) with the vehicle (10);
e2) determining a position of the first connected object (20, 21) in a reference frame (XYZ) attached to the vehicle (10);
e3) detecting a sonic signal emitted by a speaker (L) with the first microphone and with the second microphone;
e4) locating the speaker (L) in the reference frame (XYZ) attached to the vehicle (10) based on the signal detected with the first microphone and second microphone, on the position of the first connected object (20, 21) and on the position of the second microphone.
